## Europäisches Patentamt

## European Patent Office

## Office européen des brevets

(11) Veröffentlichungsnummer: **0 330 159**

**A1**

## EUROPÄISCHE PATENTANMELDUNG

(21) Anmeldenummer: **89103042.1**

(51) Int. Cl.⁴: **F02G 5/04**

(22) Anmeldetag: **22.02.89**

(30) Priorität: **24.02.88 DE 3805690**

(43) Veröffentlichungstag der Anmeldung:
**30.08.89 Patentblatt 89/35**

(84) Benannte Vertragsstaaten:
**AT BE CH DE ES FR GB IT LI NL SE**

(71) Anmelder: **AMH GMBH & CO. KG
ASPHALT-MISCHWERKE-HOHENZOLLERN**

**D-7480 Sigmaringen(DE)**

(72) Erfinder: **Höhn, Reinhold
Neudorferstrasse 16
D-6480 Wächtersbach(DE)**
Erfinder: **Lelanz, Bertram
Keltenstrasse 1
D-7480 Sigmaringen-Laiz(DE)**

(74) Vertreter: **Munderich, Paul, Dipl.-Ing.
Frankfurter Strasse 84
D-6466 Gründau-Rothenbergen(DE)**

(54) **Anlage mit mindestens einer Brennkraftmaschine, die einen Stromgenerator antreibt, und mindestens einem Wärmeverbraucher.**

(57) Die Erfindung betrifft ein Verfahren zur Kraft-Wärmekopplung, zumindest eines durch Verbrennungsmotor angetriebenen Stromgenerators (I,II,III) mit einem weiteren, oder mehreren Wärmeverbrauchern (10) bzw. deren Wärmebedarf zumindest partiell aus der Abwärme der Verbrennungsmotore(n) abgezweigt wird.

Die Abwärme wird dabei unmittelbar an der Quelle ihres Entstehens, d.h. aus dem Kühlwasservorlauf, zur Luftvorwärmung und aus der Abgassammelleitung (9.1) entnommen und dem Heizraum des Wärmeverbrauchers (10) zugeführt.

Fig.1

EP 0 330 159 A1

**Patentanmeldung**

Die Erfindung betrifft ein Verfahren zur Kraft-Wärmekopplung, zumindest eines durch Verbrennungsmotor angetriebenen Stromgenerators mit einem weiteren, oder mehreren Wärmeverbraucher(n) bzw. deren Wärmebedarf zumindest partiell aus der Abwärme der Verbrennungsmotore(n) abgezweigt wird.

Die thermische Hintereinanderschaltung von zumindest einem durch Verbrennungsmotor angetriebenen Stromaggregates und zumindest eines Wärmeverbrauchers erfolgt in der Weise, daß der Wärmeinhalt der Abgase der Kraftmaschine und deren restliche Abwärme für Heizzwecke nutzbar gemacht wird, so daß dadurch eine bessere Ausnutzung der Brennstoffe, als dies bei der Stromerzeugung im Auspuffbetrieb ohne Abwärmeausnutzung des Verbrennungsmotors möglich ist, gegeben ist.

Wie eingangs dargelegt, soll die Abwärme einem oder mehreren Wärmeverbraucher(n) zugeführt werden und zumindest einen Teil der hier benötigten Leistung liefern.

Grundsätzliche Überlegungen zu diesem Problem werden durch LUEGER, Band 40, Seiten 528 ff, rororo-Ausgabe, näher erläutert, wobei allerdings nicht global die Abwärme, sondern lediglich die Abgase der Verbrennungsmotore Basis dieser Betrachtungen sind.

Gedanken darüber, daß es eventuell interessant sein kann, den entstehenden Abwärmeanteil nicht irgendwie insgesamt, sondern jeweils an der Quelle seines partiellen Entstehens und nach Möglichkeit ohne wesentliche Umsetzungen und Transmissionen in andere denkbare Energie zu erfassen, d.h. die Wärme entsprechend ihres Anfallens zu verwerten, sind nach der o.a. Literatur nicht zu erkennen, wobei doch gerade die Umsetzung in eine andere Energieform oder der wiederholte Wechsel des Wärmeträgers den erwarteten Wirkungsgrad reduzieren kann.

Grundsätzlich ist in diesem Fall bei der vorliegenden Erfindung die Kopplung von Kraft- und Wärmeerzeugung vorgesehen.

Die Wärmeabgabe beschränkt sich als solche, beispielsweise gegenüber einem Fernkraftheizwerk, auf ein kleines Gebiet, so daß Kosten für die Wärmeverteilung nicht die Rolle spielen wie dort, da lediglich ein weiterer oder mehrere Wärmeverbraucher innerhalb einer solchen Anlage vorgesehen sind.

Dies berücksichtigend ist es deshalb Aufgabe dieser Erfindung, ein Verfahren nach der eingangs beschriebenen Art zu nennen, bei dem der Kühlwasservorlauf aus den Motoren zur Erwärmung der Verbrennungsluft eines Brenners wesentlich beiträgt, und resultierend hieraus, die Wassertemperatur im Rücklauf auf eine voreingestellte Temperatur zurückführt, und bei dem weiter die Abgase aus dem oder den Verbrennungsmotor(en) dem oder den Wärmeverbraucher(n) unmittelbar zur Nutzung, d.h. ohne nennenswerte Zwischenverluste, zugeführt wird bzw. werden.

Die erfindungsgemäße Lösung dieser Aufgabe sieht vor, daß dem Kühlwasservorlauf aus dem bzw. den Verbrennungsmotor(en) durch einen gemeinsamen Wärmeaustauscher - Wasser/Luft -, oder auch durch einen oder mehrere Primärwärmeaustauscher - Wasser/Wasser -, kombiniert mit dem gemeinsamen Wärmeaustauscher - Wasser/Luft -, der dann die Funktion eines Sekundärwärmeaustauschers übernimmt, so viel Wärme entzogen wird, daß bei Einhaltung einer vorbestimmten, geregelten Rücklauftemperatur die mögliche Nutzungsbreitedieses Wärmestromes voll erschöpft wird, daß die im Wärmeaustauscher - Wasser/Luft - vorgewärmte Luft dem mit Gas, flüssigem oder festem Brennstoff betriebenen Brenner des jeweiligen Wärmeverbrauchers zugeführt wird, und daß das Abgas des oder der Verbrennungsmotore(s) über eine Sammelleitung dem Heizraum des Verbrauchers, unabhängig von dem entstehenden Brenngasgemisch, über einen Anschluß zugeführt wird.

Durch das Merkmal 1 dieses Lösungsvorschlages erfolgt die Nutzung des Kühlwasservorlaufes in einem gemeinsamen Wärmeaustauscher - Wasser/Luft oder auch durch einen oder mehrere Primärwärmeaustauscher - Wasser/Wasser -, kombiniert mit dem gemeinsamen Wärmeaustauscher als Sekundärwärmeaustauscher. Es wird dem strömenden Wasser so viel Wärme belassen, daß eine vorbestimmte Rücklauftemperatur eingehalten werden kann.

Die Anlagenteile können sowohl in Parallel- als auch in Serienschaltung betrieben werden.

Die in dem gemeinsamen Wärmeaustauscher - Wasser/Luft - vorerwärmte Luft wird dem Brenner des jeweiligen Wärmeverbrauchers zugeführt, während das Abgas des oder der Verbrennungsmotor(en) über eine Sammelleitung dem zu beheizenden Raum des Verbrauchers zugeführt wird.

Im weiteren ist vorgesehen, daß die Kraft-Wärmekopplung der durch Verbrennungsmotore angetriebenen Stromgeneratoren mit dem Trommeltrockner einer Anlage zur Aufbereitung bituminösen Mischgutes aus Zuschlagstoffen und Bindemittel,

2

gemäß den technischen Vorschriften * ,oder aber aus Mischgut besteht, das, zumindest teilweise, aus einem mit Bindemittel und Zuschlagstoffen ergänzten,in Granulatform vorliegenden bituminösen Ausbauasphalt besteht.

Anlagen zur Aufbereitung bituminösen Mischgutes erfordern einen hohen Energiebedarf, dem durch die öffentlichen Versorgungsnetze in den seltensten Fällen in befriedigender Weise entsprochen werden kann. Die Schwierigkeiten der tariflichen Gestaltung führen zwangsläufig zu gewissen autarkischen Bestrebungen der Mischanlagenbetreiber.

Hierbei ist insbesondere die Schwierigkeit gegeben, daß während eines stark reduzierten Grundverbrauches, z.B. von 18 bis 24 Uhr und 0 Uhr bis 6 Uhr, keine große Bereitschaft besteht, den durchschnittlich 20 mal so hohen Spitzenbedarf während einer ca. 12-stündigen Arbeitszeit, in günstige Tarifvereinbarungen einzubinden, so daß man den Spitzenbedarf entweder, ausgehend von der Ebene des Grundbedarfes, oder aber praktisch von 0 ausgehend, durch eigene Krafterzeugung kostengünstig abdecken muß.

Über die Ausgangslage und das Wie läßt sich viel diskutieren, wobei die Tarifpolitik der Energieversorgungsbetriebe als nicht einheitlich zu betrachten ist.

Das Verfahren sieht für die Inbetriebnahme vor, daß die Verbrennungsmotore der Stromgeneratoren bei offener Frischluftklappe angefahren werden, und diese so lange geöffnet bleibt, bis die Betriebstemperatur im Kühlwasserrücklauf erreicht ist, und, mit Erreichung dieser Temperatur die Frischluftklappe, gesteuert durch den die Regelgröße bildenden Temperaturabgriff im rücklaufenden Wasserstrom, geschlossen und der Trommeltrockner, verbunden mit der Inbetriebnahme des Brennerventilators angefahren, wobei die Luft durch die Luftzuführung unmittelbar dem Wärmeaustauscher - Wasser/Luft - durch die Warmluftleitung über den Ventilator zum Brenner gefördert wird.

Mit Anfahren des Motors bzw. der Motoren ist die Inbetriebnahme des Entstaubungsventilators und die Einleitung der Abgase aus dem bzw. den Motor(en) in den Trommeltrockner vorgesehen.

Um die Temperatur auf die richtige Höhe im Rücklauf einregeln zu können, ist vorgesehen, daß in jeder Rücklaufleitung des Kühlwassers ein Notkühler mit vorgeordnetem Gebläse vorgesehen ist, wobei bei einer eventuellen Übertemperatur des Kühlwassers in der Rücklaufleitung der Thermostat Impuls für den Antrieb des Gebläses und damit für das Einsetzen der Luftanströmung gibt.

Die Gefährdung des Trommeltrockners und eventuell nachgeordneter Filter wird dadurch vermieden, daß bei zu hoher Temperatur im Trommeltrockner in der Abgassammelleitung, vor Eintritt in diesen, eine hier angeschlossene Abgasklappe, und zwar bei bleibender Öffnung der dem Trommeltrockner nachgeordneten Frischluftklappe und bei Stillsetzung des Brenners von dem Thermostat über die Steuerleitung betätigt wird.

Unabhängig davon erfolgt die Nachregelung des Brenners über den Temperaturregler, der die Temperatur des Materials im Trommelauslauf mißt.

Abschließend soll bemerkt werden, daß die Anzahl der durch Kraft-Wärmekopplung verbundenen Aggregate mit Wärmeaustauscher beliebig sein kann.


Vorbemerkung:

Das erfindungsgemäße Verfahren wird anhand von zwei Schaltschemata beispieslweiser Kraft-Wärme-Verbundkonzeptionen näher erläutert.

Beide Schemata sind in sich wandelbar und gehen davon aus, daß jeweils drei Stromaggregate I-II-III, gleicher Bauart, einer Anlage zur Aufbereitung bituminösen Mischgutes zugeordnet sind, von denen immer zwei parallel betrieben werden, während das dritte im Wechsel als Reserve zur Verfügung steht.

Die Leistung der Dieselgeneratoren liegt nach dem hier gegebenen Vorschlag je Einheit bei 520 kW antriebsseitig bzw. 472 kW generatorseitig, so daß

|                          |              |     |
|--------------------------|--------------|-----|
| aus den Abgasen          | 494 kW       | und |
| aus dem Kühlwasser       | 288 kW       |     |
| (bei 66 l u. 90°C)       | 782 kW x 2 = 1564 kW | |

*(gemäß den jeweils gültigen Vo°°rschriften und Richtlinien für den Bau bit. Fahrbahnoberbauschichten · des Bundesministers für Verkehr bzw. den Vorschriften der zuständigen Behörden der Länder).

zur Verfügung stehen.

Dieser Wert berücksichtigt nicht die Strahlungsverluste, da lediglich Daten für die Strahlungswärme des Motors mit 74 kW und die des Generators mit 43 kW für das diesem Beispiel zugrundeliegende Aggregat vorliegen.

In der Regel stehen ca. 1500 kW zur weiteren Nutzung zur Verfügung.

Ohne Berücksichtigung eventuell möglicher weiterer Verluste können dem Trommeltrockner aus den Abgasen von zwei Aggregaten, vorzugsweise über eine Stirnwand, Wärme in Form einer Tertiärzugabe zugeführt werden, während die dem Kühlwasser entziehbare Wärme dem Brenner zugeführt wird, wobei der aus dem Kühlwasser entziehbare Anteil bei etwa 37 % und der aus den Abgasen entnehmbare Anteil bei etwa 63 % liegt.

Der zu verwendende Trommeltrockner sieht - insbesondere im Hinblick auf eventuelle Granulatverarbeitung - einen weiten Regelbereich für den Brennerdurchsatz (3000 bis 22500 m³$_N$/h) vor.

Zu den Schemata:

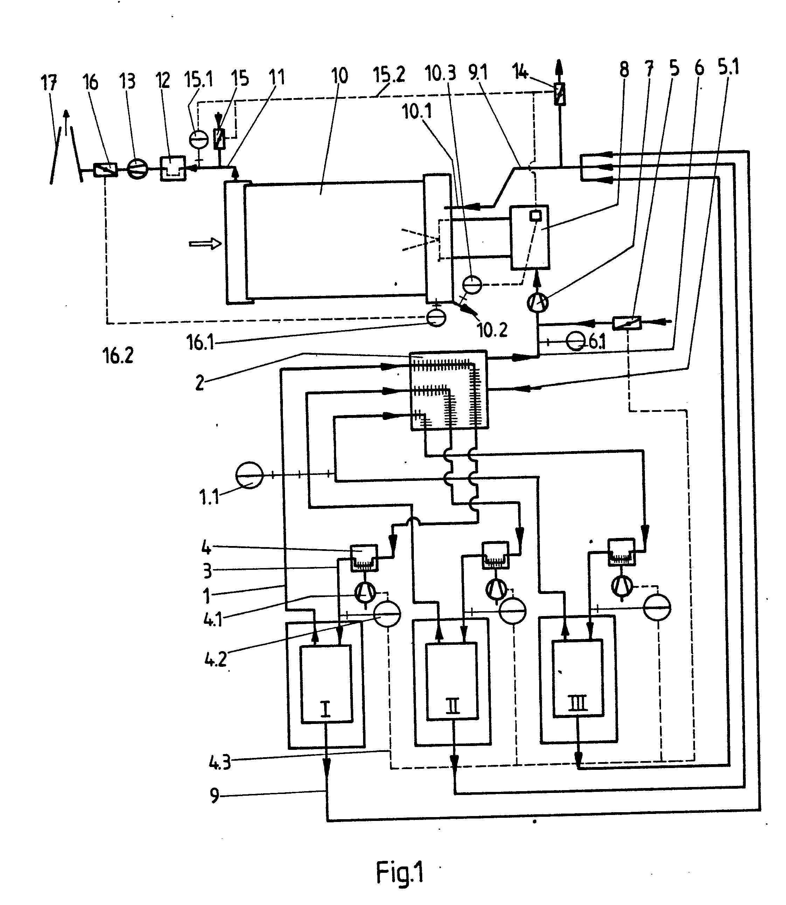

Figur 1 zeigt ein Schema, bei dem das aus jedem Antriebsmotor des Stromaggregates im Vorlauf führende Kühlwasser durch einen Wärmeaustauscher - Kühlwasser/Luft - und das strömende Kühlwasser im Rücklauf dem Kühlsystem des Antriebsmotors des Stromaggregates wieder zugeführt wird, wobei die erwärmten Gase aus dem Wärmeaustauscher in den Brenner des Trommeltrockners führen.

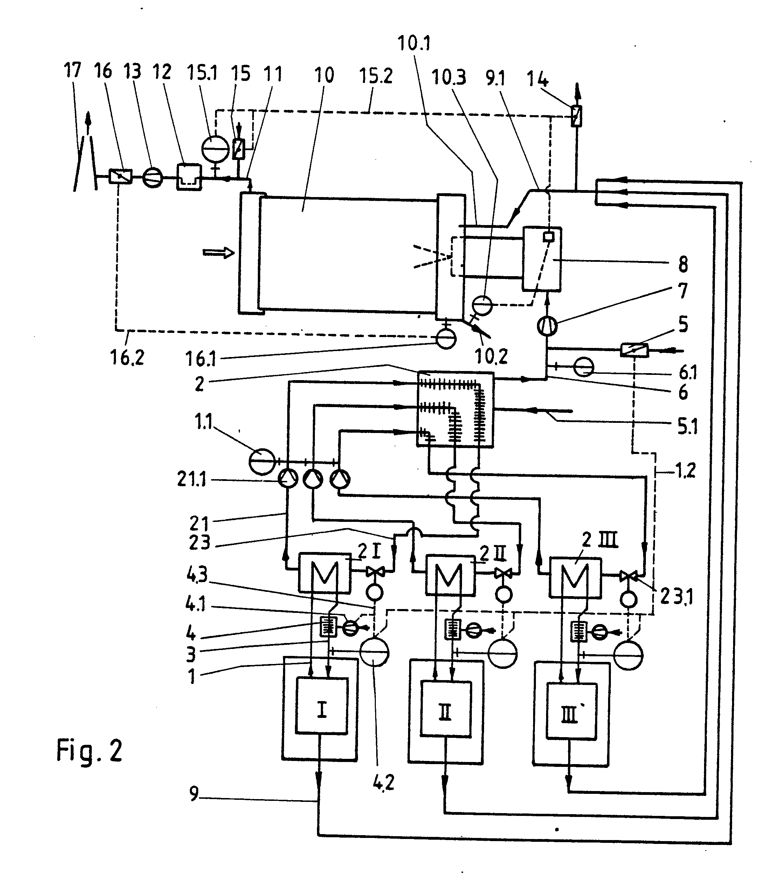

Figur 2 zeigt ein Schema bei dem das aus jedem Antriebsmotor eines Aggregates im Vorlauf führende, einen Kühlwasser-Wasser bildenden Primärwärmeaustauscher, bei dem Kühlwasser im Rücklauf dem Kühlsystem des Antriebsmotors des Stromaggregates wieder zugeführt wird, und bei dem im weiteren das in den Primärwärmeaustauschern erwärmte Wasser durch jeweils eine Pumpe abgezogen und durch den in der Vorbeschreibung zu Figur 1 genannten Wärmeaustauscher - Kühlwasser/Luft -,der hier die Funktion eines Sekundärwärmeaustauschers übernimmt, geführt und dem Primärwärmeaustauscher wieder zugeleitet wird.

Die übrigen Funktionen sind gegenüber Figur 1 unverändert beibehalten.

In der anschließenden Beschreibung wird jeweils auf das Stromaggregat I Bezug genommen. Die weiter eingesetzten Stromaggregate II und III sind identisch.

Zu Figur 1

Ausgehend vom Kühlsystem des Antriebsmotors des Stromaggregates I führt der Kühlwasservorlauf zum Sammel-Wärmeaustauscher 2 - Wasser/Luft -,
durch den auch das Kühlwasser der anderen Aggregate II und III geleitet wird.
Dem Wärmeaustauscher 2 ist die beim Anfahren offene Frischluftklappe5 sowie eine immer geöffnete unmittelbare Luftzuführung 5.1 verbunden, deren Funktion später erläutert wird.
Die Temperatur in der Kühlwasservorlaufleitung 1 ist aus der Anzeige des Instrumentes 1.1 zu erkennen. Im Rücklauf 3 des Wärmeaustauschers 2 ist ein Notkühler 4, der durch ein Gebläse 4.1 anströmbar ist, vorgesehen, wobei das Gebläse 4.1 sowie die Frischluftklappe 5 durch ein im Kühlwasserrücklauf 3 angeordnetes Thermostat 4.2 über die Steuerleitung 4.3 gesteuert werden.

Zum besseren Verständnis wird wiederholt, daß die Frischluftklappe 5 beim Anfahren grundsätzlich geöffnet ist, und erst bei Erreichung der Normaltemperatur in der Rücklaufleitung 3 schließt. Der Schließimpuls wird durch den Thermostat 4.2 ber die Leitung 4.3 gegeben.
Hierzu sollte noch die Anmerkung gemacht werden, daß zur Steuerung der Frischluftklappe 5 auch die Vorlauftemperatur vor dem Wärmeaustauscher herangezogen werden könnte. In diesem Fall sollte der Thermostat etwas niedriger eingestellt werden. Dies jedoch nur als Zwischenbemerkung.

Der Trommeltrockner 10 kann zusammen mit dem Ventilator 13 - und zwar ohne den Brenner 8 in Betrieb zu nehmen - angefahren und - ebenso wie der nachgeordnete Filter 12 durch die aus der Abgasleitung 9.1 austretenden Abgase vorerwärmt werden.

Mit Verschluß der Frischluftklappe 5 wird der Trommeltrockner 10 angefahren, wobei die Luft über eine direkte Zuführung 5.1 zum Sammelwärmeaustauscher 2, durch diesen und im weiteren durch die Heißluftleitung 6 durch den Ventilator 7 zum Brenner 8 führt.

Die vom Antriebsmotor des Stromaggregates I abgehende Abgasleitung 9, die mit den Abgasleitungen der weiteren Aggregate in der Abgassammelleitung 9.1 zusammengeführt ist, mündet über die Stirnwand

4

10.1 oder in Form einer Tertiärzugabe in den Trommeltrockner 10 ein. Über die aus dem Trommeltrockner 10 führende Leitung 11 werden durch einen im Saugbetrieb arbeitenden Ventilator 13 die Trommelabgase und eventuelle Brüden durch den Filter 12 geführt.

Bei zu hoher, den Filter 12 gefährdender Temperatur, wird die vor dem Trommeltrockner 10 in der Abgassammelleitung 9.1 angeordnete Abgasklappe 14 geöffnet,und zwar bei vorhergehender Öffnung der Frischluftklappe 15.

Beide Klappen 14 und 15, sowie der Brenner 8 werden von dem Thermostat 15.1 über die Steuerleitung 15.2 betätigt.

Die nach dem Filter 12 und dem Ventilator 13 in Richtung zum Ausblas 17 angeordnete Drosselklappe 16 wird durch den Druckregler 16.1 über die Steuerleitung 16.2 gesteuert.

Die Nachregelung des Brenners 8 erfolgt über den Temperaturregler 10.3, der die Temperatur des Materials im Trommelauslauf 10.2 mißt.

Wie erwähnt, sind alle wasser- und abgasführenden Leitungen, sowie Wärmeaustauscher, Kühler usw. stark isoliert.

Zu Figur 2

wird zunächst auf die eingangs gegebene Erläuterung verwiesen, und zwar der durch die Einführung von Primär- und Sekundäraustauscher, die durch die in der Regel damit verbundene Vergrößerung der Tauscherflächen zu einer schnellen Zurückführung der Rücklauftemperatur auf die zugelassene Temperatur führen kann.

Die Primärwärmeaustauscher 2.I bis 2.III sind als Wasser/Wasser-Tauscher ausgebildet, wobei die Wärmeaustauschergehäuse gleichzeitig die Funktion des Wasserspeichers übernehmen können.

Aus dem Wärmeaustauscher 2.I führt die Kühlwasservorlaufleitung 21 in den Wärmeaustauscher 2 - Wasser/Luft - und aus dieser Kühlwasserrücklaufleitung 23 - die den Sekundärkreis schließt -in dem Primärwärmeaustauscher 2.I zurück.

Durch das Motorregelventil 23.1 wird die Rücklauftemperatur - thermostatisch in der Rücklaufleitung 3 gemessen -, durch Beschleunigung oder Verzögerung des Wasserlaufes im Sekundärkreis 21/23 gesteuert.

Zusätzlich kann bei beiden Vorschlägen ein Thermostat 6.1 vorgesehen werden, der die Inbetriebnahme des Gebläses 7 und damit des Brenners 8, bei noch nicht ausreichenden Temperaturen, sperrt.

**Ansprüche**

1. Verfahren zur Kraft-Wärmekopplung, zumindest eines durch Verbrennungsmotor angetriebenen Stromgenerators (I,II,III) mit einem weiteren, oder mehreren Wärmeverbrauchern (10) bzw. deren Wärmebedarf zumindest partiell aus der Abwärme der Verbrennungsmotore(n) abgezweigt wird, dadurch gekennzeichnet,

daß dem Kühlwasservorlauf aus dem bzw. den Verbrennungsmotor(en) (I,II,III) durch einen gemeinsamen Wärmeaustauscher (2) - Wasser/Luft -, oder auch durch einen oder mehrere Primärwärmeaustauscher ( 2.I-2.II ) - Wasser/Wasser-, kombiniert mit dem gemeinsamen Wärmeaustauscher (2) - Wasser/Luft -, der dann die Funktion eines Sekundärwärmeaustauschers übernimmt, so viel Wärme entzogen wird, daß bei Einhaltung einer vorbestimmten, geregelten Rücklauftemperatur die mögliche Nutzungsbreite dieses Wärmestromes voll erschöpft wird,

daß die im Wärmeaustauscher (2) - Wasser/Luft -vorgewärmte Luft dem mit Gas, flüssigem oder festem Brennstoff betriebenen Brenner (8) des jeweiligen Wärmeverbrauchers (10) zugeführt wird, und

daß das Abgas des oder der Verbrennungsmotore(s) über eine Sammelleitung (9.1) dem Heizraum des Verbrauchers (10), unabhängig von dem entstehenden Brenngasgemisch, über den Anschluß (10.1) oder in Form einer Tertiärzugabe zugeführt wird.

2. Verfahren nach Anspruch 1, dadurch gekennzeichnet,

daß die Kraft-Wärmekopplung der durch Verbrennungsmotore angetriebenen Stromgeneratoren mit dem Trommeltrockner (10) einer Anlage zur Aufbereitung bituminösen Mischgutes aus Zuschlagstoffen und Bindemittel, gemäß den technischen Vorschriften * ,oder aber aus Mischgut besteht, das zumindest teilweise, aus mit Bindemittel und Zuschlagstoffen ergänztem, in Granulatform vorliegenden bituminösen Ausbauasphalt besteht.

* siehe Anmerkung    auf Seite 6

3. Verfahren nach Anspruch 1 und 2, dadurch gekennzeichnet,
da**ß** die Verbrennungsmotore der Stromgeneratoren (I,II,III) bei offener Frischluftklappe (5) angefahren werden, und diese so lange geöffnet bleibt, bis die Betriebstemperatur im Kühlwasserrücklauf erreicht ist, und, mit Erreichung dieser Temperatur die Frischluftklappe (5), gesteuert durch den die Regelgröße bildenden Temperaturabgriff im rücklaufenden Wasserstrom, geschlossen
und der Trommeltrockner (10), verbunden mit der Inbetriebnahme des Brennerventilators (7), angefahren, wobei die Luft durch die Luftzuführung (5.1) unmittelbar dem Wärmeaustauscher (2) - Wasser/Luft - durch die Warmluftleitung (6) über den Ventilator (7) zum Brenner gefördert wird.

4. Verfahren nach Anspruch 1 bis 3, dadurch gekennzeichnet,
da**ß** mit Anfahren der Antriebsmotore der Stromgeneratoren (I, II, III) die Inbetriebnahme des Entstaubungsventilators (13) - ohne Inbetriebnahme des Brenners (8) - vorgesehen ist, und dabei der Trommeltrockner (10) und der Filter (12) vorerwärmt werden.

5. Verfahren nach Anspruch 1 bis 4, dadurch gekennzeichnet,
da**ß** in jeder Rücklaufleitung (3) des Kühlwassers ein Notkühler (4) mit vorgeordnetem Gebläse (4.1) vorgesehen ist, wobei bei einer eventuellen Übertemperatur des Kühlwassers in der Rücklaufleitung (3) der Thermostat (4.2) Impuls für den Antrieb des Gebläses (4.1) und damit für das Einsetzen der Luftanströmung gibt.

6. Verfahren nach Anspruch 1 und 2, dadurch gekennzeichnet,
da**ß** bei zu hoher Temperatur im Trommeltrockner (10) in der Abgassammelleitung (9.1), vor Eintritt in diesen, eine hier angeschlossene Abgasklappe (14), und zwar bei bleibender Öffnung der dem Trommeltrockner (10) nachgeordneten Frischluftklappe (15) und bei Stillsetzung des Brenners (8) von dem Thermostat (15.1) über die Steuerleitung (15.2) betätigt wird.

7. Verfahren nach Anspruch 1 und 2, dadurch gekennzeichnet,
da**ß** die Nachregelung des Brenners (8) über den Temperaturregler (10.3), der die Temperatur des Materials im Trommelauslauf (10.2) mißt, erfolgt.

8. Verfahren nach Anspruch 1 bis 7, dadurch gekennzeichnet,
da**ß** die Anzahl der durch Kraft-Wärmekopplung verbundenen Aggregate mit Wärmeaustauscher beliebig sein kann.

Fig.1

Fig. 2

Europäisches Patentamt

**EUROPÄISCHER RECHERCHENBERICHT**

Nummer der Anmeldung

EP 89 10 3042

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-3 016 410 (JÜLICH) * Seite 5, Zeile 19 - Seite 7, Zeile 3; Figur * --- | 1 | F 02 G 5/04 |
| A | FR-A-2 459 886 (SOCIETE POUR L'EQUIPEMENT DE VEHICULES) * Seite 5, Zeile 6 - Seite 6, Zeile 36; Seite 8, Zeilen 10-59; Figuren 1,3 * --- | 1 | |
| A | DE-A-3 406 936 (RÄHMER) * Zusammenfassung; Seite 5, Zeilen 16-56, Figur 1 * --- | 1 | |
| A,P | SOVIET INVENTIONS ILLUSTRATED Nr. 88-097255/14, Woche 8814, 7. April 1988, Derwent Publications Ltd, London, GB; & SU-A-1333-809-A (E.S. TARSHIK) 24-03-1986 * Insgesamt * --- | 1 | |
| A | CH-A- 149 184 (WINTER) --- | | **RECHERCHIERTE SACHGEBIETE (Int. Cl.4)** |
| A | US-A-4 366 674 (EAKMAN) --- | | F 02 G |
| A | NL-A-8 201 926 (ASSELBERGS) ------ | | F 24 D C 10 M |

Der vorliegende Recherchenbericht wurde für alle Patentansprüche erstellt

| Recherchenort | Abschlußdatum der Recherche | Prüfer |
|---|---|---|
| DEN HAAG | 30-05-1989 | ERNST J.L. |